# EUROPEAN PATENT SPECIFICATION

(11) **EP 3 431 765 B1**
(45) Date of publication and mention of the grant of the patent: **05.07.2023**
(21) Application number: 17766836.5
(22) Date of filing: 17.03.2017
(51) Int. Cl.: F04C 5/00, F16D 1/06, H02K 7/116, F04B 43/12

(54) **TUBE PUMP**
ROHRPUMPE
POMPE À TUBE

(30) Priority: 18.03.2016 JP 2016055549
(43) Date of publication of application: 23.01.2019
(73) Proprietor: Welco Co., Ltd, Fuchu-shi, Tokyo 183-0034 (JP)
(72) Inventor: MINATODANI, Yoji, Fuchu-shi Tokyo 183-0034 (JP)
(74) Representative: Ablett, Graham Keith
(86) International application number: PCT/JP2017/010859
(87) International publication number: WO 2017/159841

(56) References cited:
- JP-A- 2000 345 971
- JP-A- 2004 162 732
- JP-A- 2006 064 167
- JP-A- 2011 179 513
- JP-A- 2014 152 707
- JP-A- 2015 222 041
- JP-U- S6 058 922
- KR-A- 20090 122 001
- US-A- 4 832 585

## Description

### TECHNICAL FIELD

The present invention relates to a tube pump.

### BACKGROUND ART

Tube pumps which transport liquid inside an elastic tube arranged in a circular arc along an inner peripheral surface of a casing formed in a substantially columnar surface by making a roller roll along the inner peripheral surface while squeezing the elastic tube between the inner peripheral surface and the roller have been known. Such tube pumps are disclosed, for example, in a Patent Gazette of Japanese Patent No. 5538829 and Patent Provisional Publication No. 2010-196538 (Japanese Patent Provisional Publication).

A tube pump disclosed in the Patent Gazette of Japanese Patent No. 5538829 includes a rotor and a drive unit configured to rotationally drive the rotor. Furthermore, the rotor rotatably supports a plurality of rollers. The tube pump is configured such that, when the rollers are rotationally driven by the drive unit, each roller rolls along a circumferential surface.

Also, a tube pump disclosed in Patent Provisional Publication No. 2010-196538 (Japanese Patent Provisional Publication) has a base and a cover, and a tube and a rotor are accommodated inside the cover. The rotor has a plurality of rollers, and gaps between the rollers and an inner peripheral surface of the cover are set to be narrow such that the tube can be squeezed. Also, a drive unit is mounted on a side of the base opposite to the cover, and a drive shaft of the drive unit is coupled to the rotor. The cover is detachable from and attachable to the base, thereby making it possible to easily perform maintenances of the tube and the rotor.

Also, Patent Provisional Publication No. H06-193614 (Japanese Patent Provisional Publication) discloses a shaft connection structure configured to connect a roller to a rotary shaft by using a key for efficient transmission of power. To the roller, a hole for inserting an end portion of the rotary shaft is formed. On each of an outer peripheral surface of the end portion of the rotary shaft and an inner peripheral surface of the hole of the roller, a key groove is formed. The roller is securely fixed to the rotary shaft by fitting a key to the key grooves of the rotary shaft and the roller.

US 4832585A discloses a roller pump with a driving mechanism and a rotating shaft rotatably driven thereby. A pump head includes a non-rotating sleeve through which the rotating shaft is inserted. A cylindrical stator is coaxially fixed radially outwardly to the sleeve. A tube for fluid transfer is supported by the inner peripheral surface of the stator. A rotor is rotatably fitted with the outer periphery of the sleeve and has at least one rotatable roller opposite to the stator with the tube clamped between the roller and stator. A transmitting mechanism is connected between the rotating shaft and the rotor.

### SUMMARY OF THE INVENTION

In the tube pump disclosed in the Patent Gazette of Japanese Patent No. 5538829, a restoring force of the tube squeezed by the rollers acts on the rotor in a radial direction of the rotary shaft. Furthermore, the rotor is supported by being coupled to a drive shaft of the drive unit. Therefore, the restoring force (radial load) of the tube acting on the rotor is transmitted to the drive shaft of the drive unit. There has been a problem that the drive unit fails or a service life of the drive unit shortens due to this radial load.

An aspect of the present invention is made in view of the above-mentioned circumstance, and an object of the aspect of the present invention is to provide a tube pump capable of suppressing failure of a drive unit and elongating service life of the drive unit.

Also, in the tube pump disclosed in Patent Provisional Publication No. 2010-196538, the cover covers the rotor around which the tube is wound from a direction of the rotary shaft and is mounted on the base. Therefore, there has been a problem that, while mounting the cover on the base, the tube gets pressed by the cover in the direction of the rotary shaft and drops off the rotor, thereby making it difficult to properly place the tube between the rotor and the inner peripheral surface of the cover.

Another aspect of the present invention is made in view of the above-mentioned circumstance, and an object of the another aspect of the present invention is to provide a tube pump which can be assembled easily.

Also, since the shaft connection structure disclosed in Patent Provisional Publication No. H06-193614 (Japanese Patent Provisional Publication) has a structure in which one of the shafts (rotary shaft) and the key are to be inserted in the hole formed to the other of the shafts (rollers), it has been difficult to downsize an outer diameter of the other of the shaft. Furthermore, the key groove (inner groove) needs to be formed on the inner peripheral surface of the hole of the other of the shaft, but there has also been a problem that processing cost of the inner groove is relatively high.

According to the present invention there is provided a tube pump comprising:-
a base having a cylindrical supporting part protruding from one face side, the cylindrical supporting part having a hollow portion;
a bearing placed on an outer periphery of the cylindrical supporting part;
a columnar inner peripheral surface provided on said one face side;
a tube of which at least a portion is disposed along the inner peripheral surface;
a rotor disposed concentrically with the inner peripheral surface and having a coupling hole to accommodate the cylindrical supporting part and the bearing whereby the rotor is rotatably supported by the bearing while squeezing the tube between the rotor and the inner peripheral surface;
a drive unit attached on the other face side of the base and having a drive shaft passing through the base to the one face side to be coupled to the rotor;
characterised by
a cylindrical coupling member located in a hollow portion of the cylindrical supporting part;
a coupling hole is formed at a center of the rotor in which one end of the coupling member fits to couple to the rotor;
wherein the other end of the cylindrical coupling member has a fitting hole into which a distal end of the drive shaft fits when the drive shaft is inserted in the cylindrical coupling member to couple the drive shaft of the drive unit.

In another embodiment, the one end of the cylindrical coupling member has a spline joint for coupling the rotor to the cylindrical coupling member.

In still another embodiment, an annular groove extending in a circumferential direction is formed on an inner peripheral surface of the rotor on which the coupling hole is formed;
wherein the bearing placed on an outer periphery of the cylindrical supporting part comprises a pair of bearings;
wherein a cylindrical spacer is tucked between the pair of bearings; and
wherein the pair of bearings and the spacer fit in the annular groove.

In still another embodiment, the spacer is fixed to the inner peripheral surface of the rotor on which the coupling hole is formed.

In yet another embodiment, wherein, in an axial direction of the rotor, a position of the coupling member overlaps with the position of the bearing.

### BRIEF DESCRIPTION OF THE DRAWINGS

[Fig. 1] Fig. 1 is an appearance diagram of a tube pump according to an embodiment of the present invention.
[Fig. 2] Fig. 2 is an appearance diagram of the tube pump according to the embodiment of the present invention.
[Fig. 3] Fig. 3 is an exploded view of the tube pump according to the embodiment of the present invention.
[Fig. 4] Fig. 4 is a perspective side view of a pump unit according to the embodiment of the present invention.
[Fig. 5] Fig. 5 is an appearance diagram of a cover according to the embodiment of the present invention.
[Fig. 6] Fig. 6 is an exploded view of a rotor according to the embodiment of the present invention.
[Fig. 7] Fig. 7 is a side sectional view of an example tube pump unit not falling within the scope of the claims.
[Fig. 8] Fig. 8 is an appearance diagram of a drive unit of the example tube pump.
[Fig. 9] Fig. 9 is an exploded oblique view of the drive unit of the example tube pump.
[Fig. 10] Fig. 10 is an appearance diagram of a rotation restricting part of the example tube pump.
[Fig. 11] Fig. 11 is an appearance diagram of a gear of the example tube pump.
[Fig. 12] Fig. 12 is an appearance diagram of a drive unit of a comparative example.
[Fig. 13] Fig. 13 is an exploded oblique view of the drive unit of the comparative example.
[Fig. 14] Fig. 14 is an appearance diagram of a gear of the comparative example.

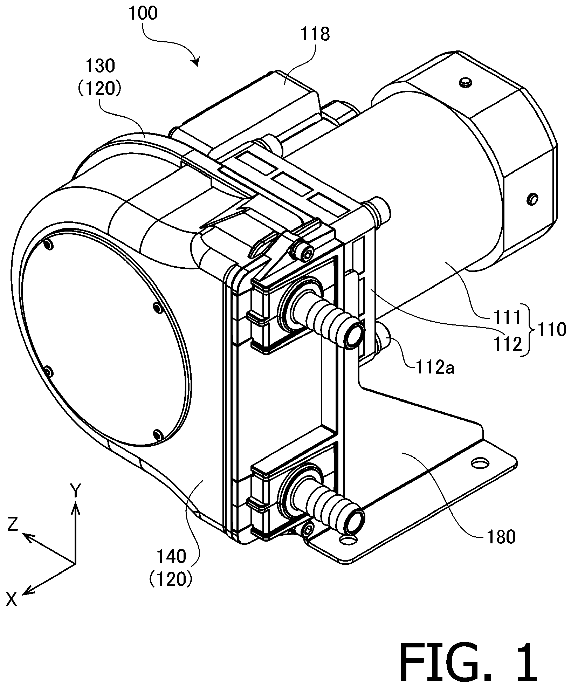

Hereinafter, an embodiment of the present invention will be described with reference to figures 1 to 6 of the drawings. The tube pump of the present invention which will be described below is a generic transfusion pump, and is used for transporting liquids in cleaning devices, food processing devices, various types of analysing instruments, medical instruments, and chemical devices. Also, the tube pump of the embodiment of the present invention can be used not only for transporting liquids but also for transporting gases and other fluids. In the following description, the same or corresponding numerals are assigned to the same or corresponding components, and redundant descriptions will be herein omitted.

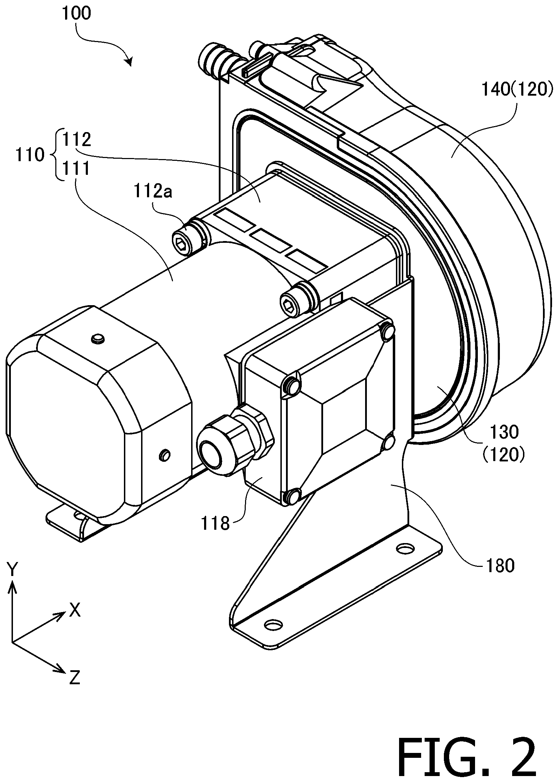

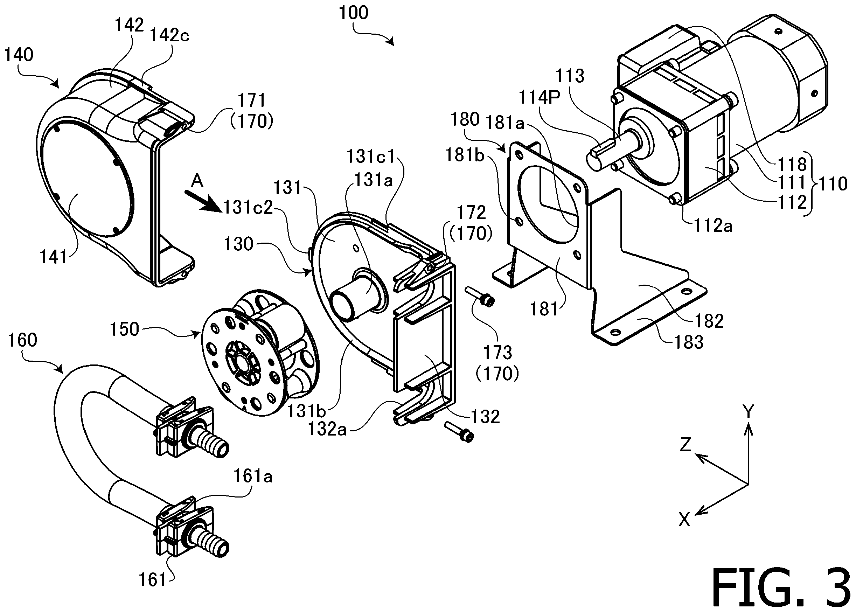

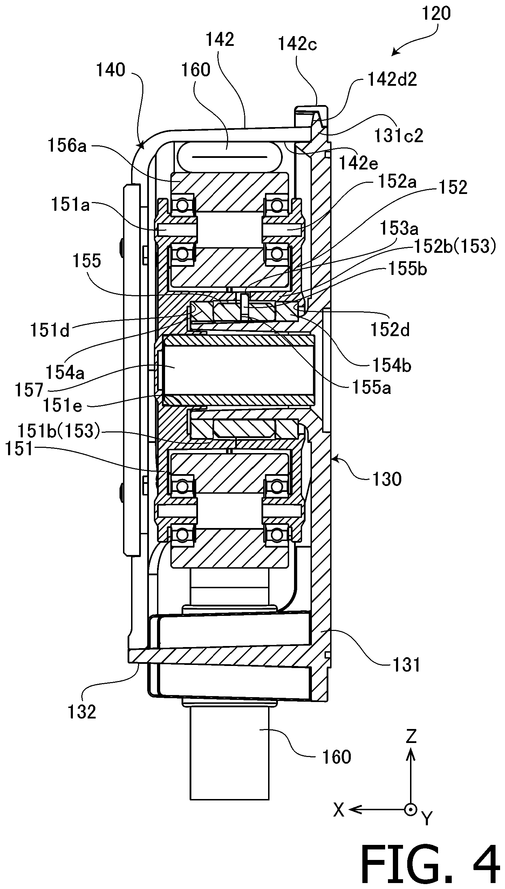

Fig. 1 and Fig. 2 are appearance diagrams of a tube pump 100 according to an embodiment of the present invention. Fig. 1 is an oblique view viewed from a front side of the tube pump 100, and Fig. 2 is an oblique view viewed from a back side of the tube pump 100. Fig. 3 is an exploded oblique view of the tube pump 100. Fig. 4 is a side sectional view of a pump unit 120 included in the tube pump 100.

It is noted that, in the following description, a depth direction/front rear direction of the tube pump 100 (in Fig. 1, a direction from the upper right toward the lower left) will be referred to as an X-axis direction, a width direction/right-left direction (in Fig. 1, a direction from the bottom toward the top) will be referred to as a Y-axis direction, and a height direction/up-down direction (in Fig. 1, a direction from the lower right toward the upper left) will be referred to as a Z-axis direction. It is noted that, although Figs. 1-2 show the tube pump 100 in a horizontally disposed state (a position in which the width direction of the tube pump 100 is oriented in the vertical direction), the tube pump 100 can also be installed in a normal attitude (an attitude in which the height direction of the tube pump 100 is oriented in the vertical direction) by altering an orientation of a stay 180 which will be described later.

As shown in Fig. 1 and Fig. 2, the tube pump 100 includes a pump unit 120 being a main unit of a pump mechanism, a drive unit 110 configured to drive the pump unit 120, and a stay 180 for attaching the tube pump 100. The drive unit 110 and the stay 180 are detachably attached to the pump unit 120 with four bolts 112a.

The pump unit 120 includes a base 130 and a cover 140. A chassis of the pump unit 120 is configured by the base 130 and the cover 140. As shown in Fig. 3, a rotor 150 and a tube 160 are accommodated inside the chassis of the pump unit 120. The tube 160 is formed of an elastomer such as a synthetic rubber and has a rubber elasticity.

The drive unit 110 includes a motor 111, a driver 118 configured to supply driving power to the motor 111, and a reduction gear 112 configured to amplify torque of the motor 111. By the reduction gear 112, a rotary motion of the motor 111 is decelerated and the torque of the motor 111 is amplified. A drive shaft 113 being an output shaft of the reduction gear 112 is connected the rotor 150, and the torque amplified by the reduction gear 112 is transmitted to the rotor 150 via the drive shaft 113.

The stay 180 is a member formed by, for example, processing a metal sheet such as a stainless steel sheet. The stay 180 has a substantially rectangular flat plate like main portion 181, a pair of leg portions 182 formed by perpendicularly bending the metal sheet backward at both ends of the main portion 181 in a width direction, and a pair of fixing portions 183 formed by bending the metal sheet outward in the width direction at a distal end of each leg portion 182. At a substantially central portion of the main portion 181, an opening 181a through which the drive shaft 113 of the drive unit 110 passes and four through holes 181b disposed at regular intervals around the opening 181a are formed. Through the through holes 181b, bolts 112a for attaching the drive unit 110 to the pump unit 120 are inserted. Hereinafter, the opening 181a and the four through holes 181b will be collectively referred to as a clearance shape.

The clearance shape of the stay 180 has four times rotation symmetry about a center of the opening 181a. Therefore, the stay 180 can be attached to the pump unit 120 even if the stay 180 is rotated about the center of the opening 181a by 90 degrees each time. The tube pump 100 can be installed in various attitudes by changing an attaching orientation of the stay 180 to the pump unit 120.

The base 130 has a substantially flat plate like main portion 131, and a substantially flat plate like bottom plate portion 132 protruding perpendicularly from a lower end portion of the main portion 131 in the X-axis positive direction. On a back surface of the main portion 131, the drive unit 110 and the stay 180 are fixed. Also, a circular through hole is formed at the center of the main portion 131, and a cylindrical portion 131a protruding perpendicularly from a rim of the through hole is formed. In the cylindrical portion 131a, the drive shaft 113 of the drive unit 110 is inserted from the back side. Furthermore, to the bottom plate portion 132, a pair of U-shaped cut-out portions 132a in which tube joints 161, which will be described later, are to be inserted is formed.

On a front surface of the main portion 131, a rib (guide portion 131b) protruding perpendicularly from the main portion 131 and extending along a U-shaped outer rim is formed. The guide portion 131b is disposed along an inner side face of a side wall 142 of the cover 140, which will be described later, when the cover 140 is mounted on the base 130.

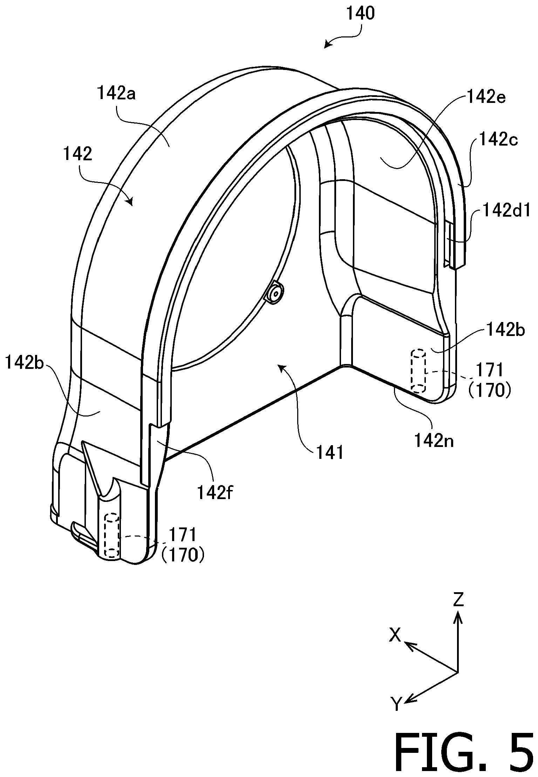

Fig. 5 is a diagram of the cover 140 viewed from the back side. The cover 140 has a substantially flat plate like main portion 141, and a side wall 142 protruding substantially perpendicularly from a rim of the main portion 141. The main portion 141 of the cover 140 is disposed in parallel with the main portion 131 of the base 130 with the rotor 150 therebetween. The side wall 142 has a semi-cylindrical upper portion 142a, and a pair of lower portions 142b extending downwardly from both ends of the upper portion 142a. The pair of lower portions 142b are substantially flat plate shaped portions formed in parallel with each other. The side wall 142 is not provided at a lower end of the cover 140 (between the pair of lower portions 142b). In other words, to the side wall 142, a cut-out portion 142n is formed at a lower end portion opposing the upper portion 142a formed in the semi-cylindrical shape.

At an end portion of the side wall 142 at the back side, a flange portion 142c protruding toward an outer peripheral side (i.e., expanding in diameter) is formed. On an inner periphery of the flange portion 142c, a pair of guiding grooves 142d1 (Fig. 5) and one guiding groove 142d2 (Fig. 4) are formed. The pair of guiding grooves 142d1 are formed at respective left and right lower end portions of the flange portion 142c. Also, the guiding groove 142d2 is formed at an upper end portion of the flange portion 142c. Furthermore, as shown in Fig. 3, at a rim portion of the main portion 131 of the base 130, a pair of projections 131c1 and one projection 131c2, protruding circumferentially, are formed. The pair of projections 131c1 are formed at both end portions of the main portion 131 in the left-right direction in forms that extend in the up-down direction. Also, the projection 131c2 is formed at an upper end portion of the main portion 131. When the cover 140 is mounted on the base 130, the pair of projections 131c1 are fitted in the pair of guiding grooves 142d1, respectively. Furthermore, as shown in Fig. 4, the projection 131c2 is fitted in the guiding groove 142c2. An inner diameter of the flange portion 142c at positions where the guiding grooves 142d1, 142d2 are not formed is designed to be substantially the same as an outer diameter of the main portion 131 of the base 130 at positions where the projections 131c1, 131c2 are not formed. Therefore, when the projections 131c1, 131c2 are fitted in respective guiding grooves 142d1, 142d2, an inner side face of the flange portion 142c and an end face of the main portion 131 contact with each other.

Furthermore, the tube pump 100 of the present embodiment includes a fixing structure 170 for fixing the cover 140 to the base 130. The fixing structure 170 of the present embodiment is configured with screw holes (female screws) 171 formed on the cover 140, through holes 172 formed on the base 130, and bolts 173 for tightening the cover 140 and the base 130 together. As shown in Fig. 5 with dotted lines, the screw holes 171 are formed at lower end portions of a pair of lower portions 142b of the cover 140. Furthermore, the through holes 172 are formed at positions that communicate with the screw holes 171 when the cover 140 is mounted on the base 130, and penetrate through the base 130 in the up-down direction. The cover 140 is mounted on the base 130 from above such that the projections 131c1 are inserted in corresponding guide grooves 142d1. As the bolts 173 inserted in the through holes 172 from below are screwed in the screw holes 171, the cover 140 gets fixed to the base 130. The rotor 150 and the tube 160 are accommodated in a special area surrounded by the cover 140 and the base 130.

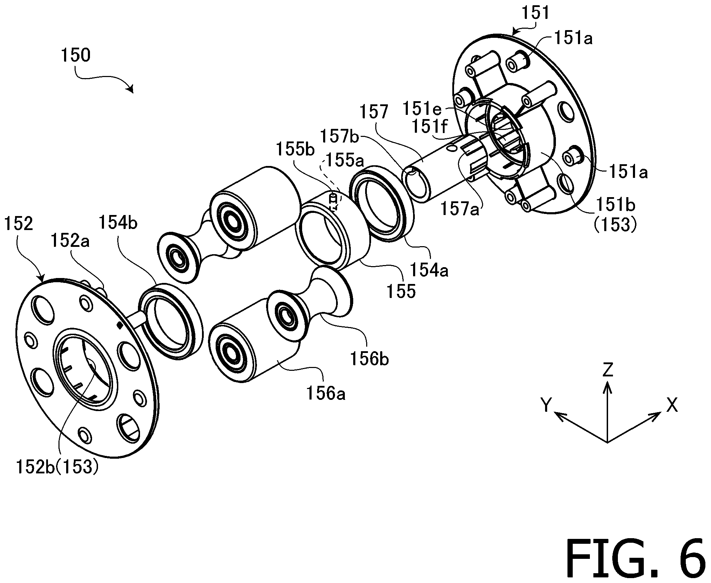

Fig. 6 is an exploded oblique view of the rotor 150. The rotor 150 includes two disk like frames 151 and 152 forming flange portions. On a back surface of the frame 151 disposed on the front side, four bosses 151a and one cylindrical portion 151b, protruding perpendicularly, are formed. The four bosses 151a are disposed around a rotary shaft of the rotor 150 at regular intervals (i.e., disposed on a columnar surface concentric with the drive shaft 113). On a front surface of the frame 152 disposed on the back side, four bosses 152a and one cylindrical portion 152b, protruding perpendicularly, are formed. The four bosses 152a are disposed to oppose to the four bosses 151a in the X-axis direction. The cylindrical portion 151b protrudes perpendicularly from a rim of a through hole provided at the center of the frame 151. Similarly, the cylindrical portion 152b protrudes perpendicularly from a rim of a through hole provided at the center of the frame 152. Outer diameters of the cylindrical portion 151b and the cylindrical portion 152b are substantially the same, and opposing end faces are made to abut against each other to form one continuous cylindrical body 153.

An inner diameter of the body 153 of the rotor 150 is larger than an outer diameter of the cylindrical portion 131a of the base 130, and a hollow portion of the body 153 accommodates the cylindrical portion 131a of the base 130. Also, a pair of annular bearings 154a, 154b and a cylindrical spacer 155 are disposed between the body 153 and the cylindrical portion 131a. The bearings 154a, 154b and the spacer 155 are fitted in annular grooves formed on an inner periphery of the body 153. Furthermore, the spacer 155 are disposed between the bearing 154a and the bearing 154b. The spacer 155 is used to hold the bearing 154a and the bearing 154b with a predetermined gap therebetween in the X-axis direction. To the spacer 155, a screw hole 155a penetrating in a radial direction of the spacer 155 is formed. A locking screw 155b is screwed in the screw hole 155a, and one end portion of the locking screw 155b protrudes from an outer peripheral surface of the spacer 155. On the body 153, a through hole 153a is formed. The one end portion of the locking screw protruding from the outer peripheral surface of the spacer 155 is inserted in the through hole 153a. By this configuration, displacements of the spacer 155 with respect to the body 153 of the rotor 150 in an axial direction (X-axis direction, second direction) and in a circumferential direction are restricted, and thereby the spacer 155 is fixed to the body 153.

The bearings 154a and 154b are sliding bearings. The bearings 154a and 154b are not fixed to the body 153 but are held to be freely rotatable with respect to the body 153. Furthermore, the bearing 154a is tucked between a level difference 151d provided to an inner periphery of the cylindrical portion 151b and the spacer 155. By this configuration, a displacement of the bearing 154a in an axial direction of the bearing 154a (X-axis direction) is restricted. Similarly, the bearing 154b is tucked between a level difference 152d provided to an inner periphery of the cylindrical portion 152b and the spacer 155. By this configuration, a displacement of the bearing 154b in an axial direction of the bearing 154b is restricted. In other words, an annular groove extending in a circumferential direction and having the level difference 151d and the level difference 152d are formed on an inner peripheral surface of the body 153, and the pair of bearings 154a and 154b and the spacer 155 are fitted in this annular groove. Therefore, the bearing 154a and 154b are held such that only their rotating movements are permitted. As the bearings 154a and 154b, a ball bearing in which an inner ring is configured to be freely rotatable with respect to an outer ring may be used. In this case, the outer rings of the bearings 154a and 154b are fixed by, for example, firmly fitting to the inner peripheral surfaces of the cylindrical portions 151b and 152b.

The rotor 150 includes a pair of rollers 156a and a pair of guide rollers 156b. The rollers 156a and the guide rollers 156b are rotatably supported by corresponding pairs of boss 151a and boss 152a. The pair of rollers 156a are disposed while being arranged in a radial direction of the rotor 150 with the body 153 therebetween. The pair of guide rollers 156b are also disposed while being arranged in a radial direction of the rotor 150 with the body 153 therebetween. The radial direction the pair of rollers 156a are arranged and the radial direction the pair of guide rollers 156b are arranged are orthogonal to each other. That is, the rollers 156a and the guide rollers 156b are alternately disposed in a rotating direction of the rotor 150 with 90 degrees intervals.

A portion of the roller 156a protrudes to an outer peripheral side with respect to the frames 151, 152. The roller 156a has a substantially cylindrical shape, and the tube 160 is squeezed between an outer peripheral surface of the roller 156a and an inner peripheral surface 142e of the cover 140. The guide roller 156b (Fig. 6) has an outer peripheral surface having a shape of a hyperboloid of one sheet which a central portion in an axial direction of the guide roller 156b is constricted such that the guide roller 156b conforms to a cylindrical outer peripheral surface of the tube 160 in a non-squeezed state. A position of the tube 160 in the X-axis direction is kept at a central portion of the guide roller 156b in the X-axis direction by the tube 160 contacting the outer peripheral surface of the guide roller 156b. By this configuration, the tube 160 can be prevented from being damaged by being scratched by the main portion 131 of the base 130, the main portion 141 of the cover 140, the frame 151 or the frame 152. Furthermore, vibrations of the tube 160 with respect to the rotary shaft of the rotor 150 in an axial direction and a radial direction of the rotary shaft of the rotor 150 that occurs during operation can also be suppressed. It is noted that the rotor 150 may include four cylindrical rollers 156a in place of the pair of rollers 156a and the pair of guide rollers 156b.

As shown in Fig. 4, the tube 160 is nipped between the roller 156a and the inner peripheral surface 142e of the side wall 142 of the cover 140, and is squeezed so that an inner peripheral surface of the tube 160 is crushed. At a squeezed position (collapsed part) of the tube 160, a hollow portion of the tube 160 is closed. As the roller 156a rolls along the inner peripheral surface 142e of the side wall 142, the collapsed part of the tube 160 moves along with the roller 156a, and thereby liquid inside the tube 160 moves in a rotating direction of the rotor 150 (a turning direction of the roller 156a).

As shown in Fig. 4 and Fig. 6, a coupling hole 151e is formed inside the cylindrical portion 151b of the frame 151. The rotor 150 and a coupling shaft 157 are coupled by fitting one end of the coupling shaft 157 on the front side in the coupling hole 151e. On an inner peripheral surface of the coupling hole 151e, a plurality of protruding portions 151f extending in the X-axis direction are formed at constant intervals in a circumferential direction. Also, the one end of the coupling shaft 157 on the front side is a spline shaft which a plurality of grooves 157a extending in the X-axis direction are formed on an outer peripheral surface at constant intervals in a circumferential direction. The coupling shaft 157 and the coupling hole 151e are coupled by a spline joint by fitting the protruding portions 151f of the coupling hole 151e in respective grooves 157a of the coupling shaft 157. The coupling shaft 157 is a substantially cylindrical member. In a hollow portion (fitting hole) of the coupling shaft 157, the drive shaft 113 is inserted. On an inner peripheral surface of the coupling shaft 157, a groove 157b extending in the X-axis direction is formed.

Next, methods for attaching the rotor 150 and the tube 160 to the tube pump 100 will be described. Attachments of the rotor 150 and the tube 160 are performed in a state where the cover 140 is detached from the base 130 and the drive unit 110 is attached to the base 130. In this state, the drive shaft 113 is inserted in a hollow portion of the cylindrical portion 131a of the base 130. As the rotor 150 is attached to the front side (X-axis positive direction side) of the base 130, the cylindrical portion 131a of the base 130 gets inserted in the bearings 154a and 154b of the rotor 150, and the cylindrical portion 131a and the bearings 154a and 154b slidably fit. By this configuration, the rotor 150 is supported rotatably with respect to the base 130.

Also, as the rotor 150 is attached to the base 130, the coupling shaft 157 of the rotor 150 couples with the drive shaft 113. Specifically, on an outer peripheral surface of the drive shaft 113 (Fig. 3), a key 114P extending in the X-axis direction is provided. The drive shaft 113 couples with the coupling shaft 157 as the drive shaft 113 is inserted in the coupling shaft 157 and the key 114P of the drive shaft 113 is accommodated in the groove 157b of the coupling shaft 157. Furthermore, since the coupling shaft 157 is coupled to the frame 151 of the rotor 150, a rotary motion of the drive shaft 113 is transmitted to the rotor 150 via the coupling shaft 157.

After the rotor 150 is coupled to the drive shaft 113, the tube 160 is put on an outer periphery of the rotor 150 to form a U shape. As shown in Fig. 3, a pair of tube connectors 161 are attached at both ends of the tube 160. On a back surface of each tube connector 161, a guiding groove 161a is formed. Each tube connector 161 is inserted to the cut-out portion 132a of the bottom plate portion 132 of the base 130. Each tube connector 161 is held on the base 130 by a rim portion of the cut-out portion 132a of the bottom plate portion 132 of the base 130 being inserted in the guiding groove 161a. By this configuration, displacements of the tube 160 in the up-down direction and the left-right direction are prevented and thereby the tube 160 is prevented from falling off the rotor 150.

After the tube 160 is attached, the cover 140 is attached to the base 130. As indicated in Fig. 3 with an arrow A, the cover 140 is attached to the base 130 from above.

The pump unit 120 has a guiding structure configured to guide the cover 140 to a predetermined position with respect to the base 130. The guiding structure includes a second direction displacement restricting structure for restricting displacement of the cover 140 with respect to the base 130 in the front-rear direction (X-axis direction, second direction), and a third direction displacement restricting structure for restricting displacement of the cover 140 with respect to the base 130 in the right-left direction (Y-axis direction, third direction).

In attaching the cover 140 to the base 130, the cover 140 is positioned with respect to the base 130 in the X-axis direction by making an end face 142f (Fig. 5) on a back side of the side wall 142 of the cover 140 to abut the rim portion (a portion outside the guide portion 131b) of the main portion 131 of the base 130 from the front side. Also, as the projection 131c1 of the base 130 is inserted in the guiding groove 142d1 of the cover 140, the projection 131c1 gets nipped between a pair of opposing side walls of the guiding groove 142d1 from both sides in the second direction (X-axis direction), and therefore displacement of the cover 140 with respect to the base 130 in the second direction is restricted. That is, a set of the projection 131c1 of the base 130 and the guiding groove 142d1 of the cover 140 functions as the second direction displacement restricting structure.

Also, rattling of the cover 140 within a plane perpendicular to the X-axis direction can be prevented by the inner side face of the flange portion 142c of the cover 140 and an end face of the rim portion of the main portion 131 of the base 130 contacting with each other. Specifically, displacement of the cover 140 with respect to the base 130 in the third direction (Y-axis direction) is restricted when the main portion 131 of the U-shaped base 130 is inserted to the flange portion 142c of the U-shaped cover 140. Also, displacement of the cover 140 with respect to the base 130 further downward (Z-axis direction, first direction) is restricted when the main portion 131 is inserted up to a deepest part of the flange portion 142c and an upper end face of the base 130 contacts an upper end portion of an inner peripheral surface of the flange portion 142c. That is, a set of the flange portion 142c of the cover 140 and the main portion 131 of the base 130 functions as the third direction displacement restricting structure and the first direction displacement restricting structure.

Also, in attaching the cover 140 to the base 130, the cover 140 is guided and positioned to be mounted at a predetermined position in two directions perpendicular to the rotary shaft of the rotor 150 (Y-axis direction and Z-axis direction) by the inner side face of the side wall 142 of the cover 140 and an outer side face of the guide portion 131b of the base 130 contacting with each other. That is, a set of the side wall 142 of the cover 140 and the guide portion 131b of the base 130 functions as the third direction displacement restricting structure and the first direction displacement restricting structure too.

Also, while attaching the cover 140 to the base 130, the rotor 150 and the tube 160 enters in the cover 140 from below. A width in the right-left direction of the cut-out portion 142n formed at the lower end portion of the cover 140 is set larger than an outer diameter of the rotor 150. Also, the width of the cut-out portion 142n is set to a size which the rotor 150 and the tube 160 put on the outer periphery of the rotor 150 can pass through. Therefore, the cover 140 can be attached to the base 130 from above while accommodating the rotor 150 inside the cover 140 through the cut-out portion 142n. Furthermore, when mounting the cover 140 to the base 130, the tube 160 gets nipped between the rollers 156a of the rotor 150 and the inner peripheral surface 142e of the cover 140. After being nipped between the rollers 156a and the inner peripheral surface 142e, the tube 160 enters in the cover 140 while being squeezed.

After the cover 140 is disposed at the predetermined position with respect to the base 130 while accommodating the rotor 150 and the tube 160 therein, the cover 140 and the base 130 are fixed to each other by two bolts 173. It is noted that, since the screw holes 171 extend in the up-down direction (cover mounting direction; first direction), the cover 140 and the base 130 are tightened together in the up-down direction by the bolts 173. Therefore, even if an upward force is acting on the cover 140 due to the restoring force of the squeezed tube 160, the cover 140 can be displaced to the predetermined position while resisting to the restoring force of the tube 160 by tightening forces of the bolts 173 acting downward and can be firmly fixed to the base 130. On the other hand, the only actions needed to remove the cover 140 from the base 130 is removing the two bolts 173 and pulling the cover upward.

As described above, in the present embodiment, the rotor 150 and the tube 160 are accommodated inside the cover 140 by mounting the cover 140 to the base 130 from above in the state where the rotor 150 and the tube 160 are mounted on the base 130. Furthermore, while mounting the cover 140, the tube 160 receives a downward force from the cover 140 but does not receive forces in the front-rear directions. Therefore, the tube 160 is prevented from displacing in an axial direction of the rotor 150 and falling off the rotor 150 while mounting the cover 140.

Also, after the cover 140 is mounted on the base 130, the position of the cover 140 is fixed by the fixing structure 170 (screw holes 171, through holes 172 and bolts 173). Therefore, the cover 140 will not displace from the predetermined position with respect to the base 130 by external forces or the force from the tube 160.

Also, in the present embodiment, the tube 160 is held on the base 130 by attaching the holder 161 of the tube 160 to the cut-out portion 132a of the base 130. In this state, displacements of the tube 160 in the up-down direction and the right-left direction are restricted by the guiding groove 161a of the holder 161 fitting to the rim portion of the cut-out portion 132a of the bottom plate portion 132, and thereby the tube 160 is prevented from falling off the rotor 150. Furthermore, since the tube 160 is held on the base 130 even in a state where the cover 140 is not attached to the base 130, there is no need to hold the tube 160 to place the tube 160 at an appropriate position while attaching the cover 140 to the base 130, and therefore the tube pump 100 is easy to assemble.

Also, in the present embodiment, the rotor 150 is rotatably supported on the base 130 by the bearings 154a and 154b fitting in the cylindrical portion 131a of the base 130. Furthermore, the drive unit 110 transmits the rotary motion to the rotor 150 supported on the base 130 via the drive shaft 113. By providing the structure for supporting the rotor 150 and the structure for transmitting the rotary motion to the rotor 150 separately as described above, loads acting on the drive unit 110 can be suppressed.

Specifically, as the rollers 156a that the rotor 150 has squeeze the tube 160 between the inner peripheral surface 142e of the cover 140, the rotor 150 receives forces acting in radially inward directions (radial loads) due to the restoring forces of the tube 160 for recovering from the squeezed state to the original cylindrical state. Furthermore, since the rollers 156a turn around the rotary shaft of the rotor 150, the radial loads also rotate. For example, if the pair of rollers 156a are symmetrically disposed in the right-left direction with respect to the rotary shaft of the rotor 150 (i.e., the pair of rollers 156a are arranged in the Y-axis direction), since every rollers 156a squeezes the tube 160 to about the same degree, two radial loads the rotor 150 receives from the tube 160 will be cancelled. On the other hand, if one of the pair of rollers 156a is positioned above the rotary shaft and the other is positioned below the rotary shaft, since the pump unit 120 has a vertically asymmetrical shape (specifically, no side wall 142 is formed on the lower half), the radial loads acting on the rotor 150 will not be cancelled and thus remain. Furthermore, the radial loads that are not cancelled and remained vary in magnitudes and directions in accordance with a rotating position (phase) of the rotor 150. Assuming that the varying radial loads act on the drive shaft 113, the drive unit 110 may fail or a service life of the drive unit 110 may be shortened.

However, in the present embodiment, the radial loads acting on the rotor 150 act on the base 130 via the bearings 154a, 154b and the cylindrical portion 131a on which the bearings 154a and 154b are put. Accordingly, the radial loads do not act on the drive shaft 113 and therefore occurrence of problems such as the failure of the drive unit 110 can be suppressed.

An example of a tube pump will now be described which is not encompassed by the claims. In this example of a tube pump the drive shaft 113 of a drive unit 110A and a rotor 150A are coupled via a rotation restricting part 114 and a gear 115, which will be described later, in place of the coupling shaft 157.

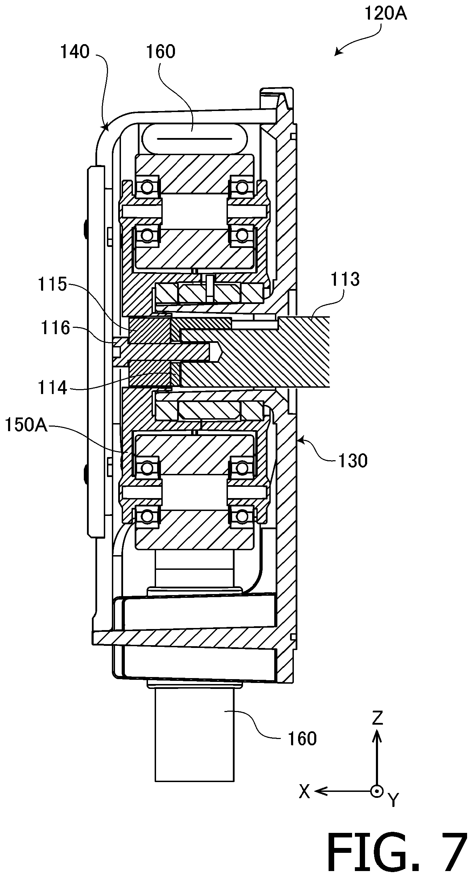

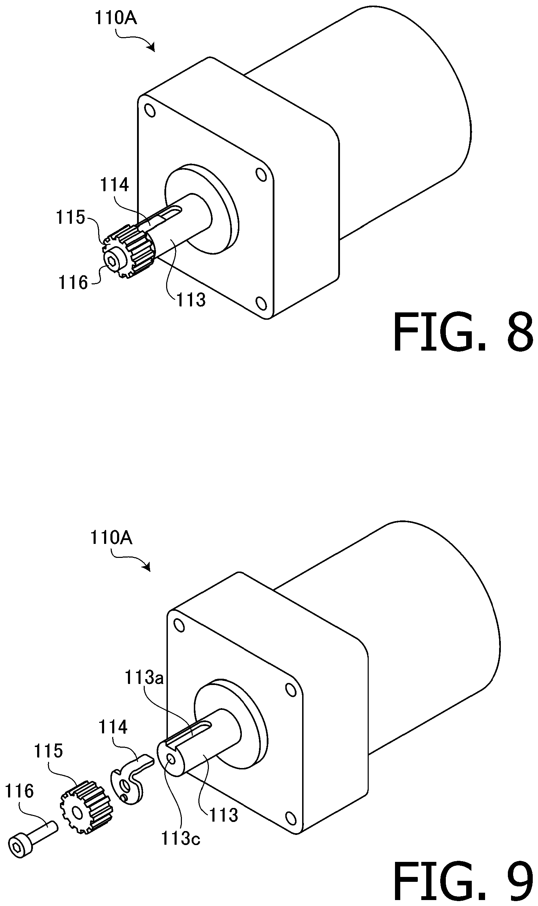

Fig. 7 is a side sectional view of a pump unit 120A of the example. Fig. 8 and Fig. 9 are an appearance diagram and an exploded oblique view of the drive unit 110A of the example tube pump, respectively.

As shown in Fig. 8 and Fig. 9, at a distal end of the drive shaft 113 of the drive unit 110A, the rotation restricting part 114 and the gear 115 are attached by a bolt 116.

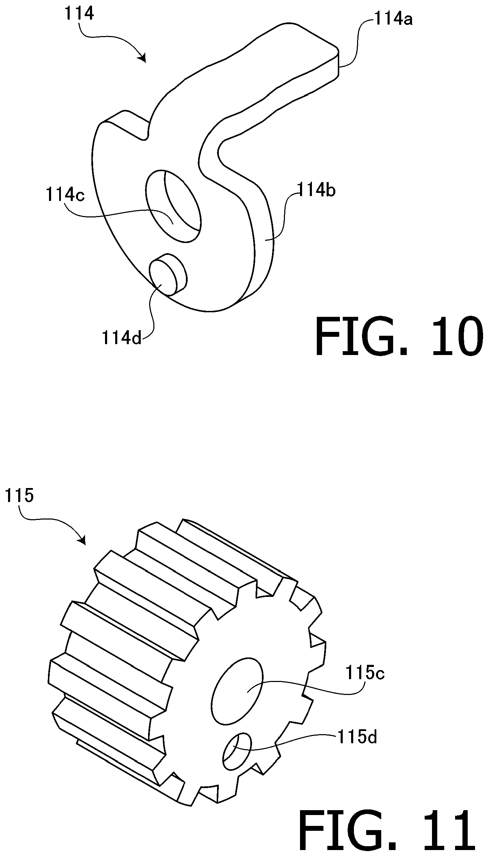

Fig. 10 is an appearance diagram of the rotation restricting part 114 (an oblique view viewed from the front). The rotation restricting part 114 is a member formed by, for example, processing a metal sheet such as a stainless steel sheet. The rotation restricting part 114 has a substantially disk-shaped base portion 114b to which a through hole 114c is formed at a central portion, and a substantially strip-shaped (rectangular plate-shaped) leg portion 114a extending from one end of the base portion 114b.

The substantially disk-shaped base portion 114b has a substantially D shape formed by cutting the disk shape with a plane perpendicular to a plate face of the disk shape (D-cut) at a position away from the through hole 114c.

The leg portion 114a protrudes from a central portion of the D-cut end face of the base portion 114b, is bent at right angles and then extends in a direction perpendicular to the plate surface of the base portion 114b. As shown in Fig. 8, the leg portion 114a fits in a key groove 113a (Fig. 9) formed on the drive shaft 113 and restricts rotation of the rotation restricting part 114 with respect to the drive shaft 113 about a rotation center axis of the drive shaft 113.

Also, to the base portion 114b, a columnar protruding portion 114d protruding in a direction opposite to the direction the leg portion 114a extends is formed. The protruding portion 114d is formed, for example, by a half punch press (or a half piercing) process.

Fig. 11 is an appearance diagram of the gear 115 (an oblique view viewed from the back). To the gear 115, a through hole 115c is formed concentrically with a rotation center axis of the gear 115. Also, on a back surface of the gear 115, a columnar depressed portion 115d is formed. The protruding portion 114d formed to the base portion 114b of the rotation restricting part 114 fits in the depressed portion 115d and restricts rotation of the gear 115 about the rotation center axis with respect to the rotation restricting part 114. That is, by the fitting of the leg portion 114a of the rotation restricting part 114 in the key groove 113a of the drive shaft 113 and the fitting of the protruding portion 114d of the rotation restricting part 114 in the depressed portion 115d of the gear 115, the rotation of the gear 115 about the rotation center axis with respect to the drive shaft 113 is restricted, and thereby the gear 115 always rotates integrally with the drive shaft 113.

The gear 115 and the rotation restricting part 114 are fixed to the drive shaft 113 by inserting an axis of the bolt 116 in the through hole 115c of the gear 115 and the through hole 114c of the rotation restricting part 114 and then screwing the axis of the bolt 116 in a screw hole (female screw) 113c formed at a distal end portion of the drive shaft 113.

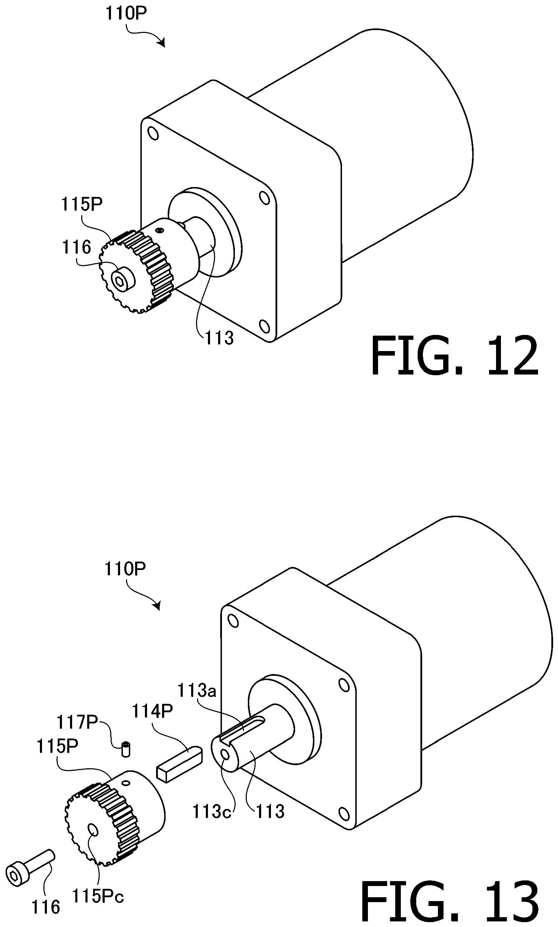

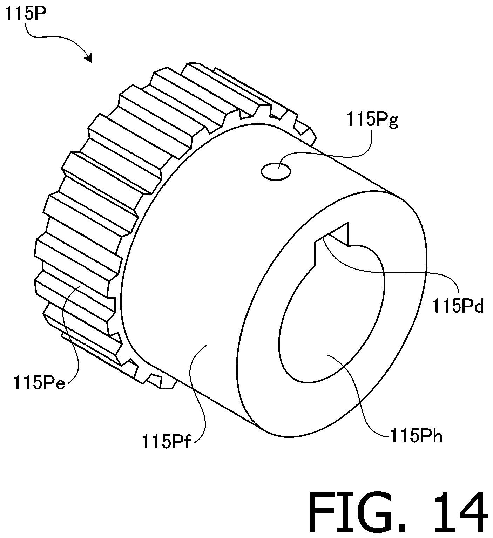

Hereinafter, a comparative example will be used to explain effects that can be obtained from the example tube pump. Fig. 12 and Fig. 13 are an appearance diagram and an exploded oblique view of a drive unit 110P being a comparative example, respectively. Fig. 14 is an appearance diagram (oblique view viewed from the back) of a gear 115P of the comparative example. This comparative example is a general configuration example which connects a gear to a drive shaft by using a key.

The gear 115P has a tubular portion 115Pf on which no tooth 115Pe (Fig. 14) is formed. To this tubular portion 115Pf, a hole 115Ph to which the drive shaft 113 is to be inserted is formed. On a peripheral surface of the hole 115Ph, a key groove 115Pd, having the same groove width as the key groove 113a of the drive shaft 113, is formed. Rotation of the gear 115P with respect to the drive shaft 113 is restricted by fitting a key 114P (Fig. 13) both in the key groove 113a of the drive shaft 113 and the key groove 115Pd of the gear 115P, and thereby the gear 115P always rotates integrally with the drive shaft 113. Also, to the tubular portion 115Pf, a screw hole (female screw) 115Pg extending in a radial direction is formed. The drive shaft 113, the key 114P and the gear 115P are integrated by screwing a locking screw 117P (Fig. 13) into the screw hole 115Pg in a state where the key 114P and the drive shaft 113 are inserted in the hole 115Ph and firmly tightening the key 114P and the drive shaft 113 together. Further, the gear 115P is securely fixed to the drive shaft 113 by screwing the bolt 116 in the screw hole 113c formed at the distal end portion of the drive shaft 113 via the through hole 115Pc of the gear 115P.

When the above-described example tube pump and comparative example are compared, since the comparative example has the configuration in which the drive shaft 113 (and the key 114P) fits in the hole 115Ph (and the key groove 115Pd) of the gear 115P, an outer diameter of the gear 115P is larger than an outer diameter of the drive shaft 113. In contrast, in the variation, since there is no need to insert the drive shaft 113 and the key 114P into the gear 115, it is possible to make a diameter of the gear 115 smaller than that in the comparative example (e.g., up to a diameter substantially equal to or smaller than that of the drive shaft 113).

Also, in the example tube pump, since there is no need to insert the drive shaft 113 and the key 114P into the gear 115, there is no need to provide the body 115Pf. As a result, it becomes possible to make an overall length of the gear 115 shorter than that of the comparative example.

Also, in the comparative example, it is necessary to provide the key groove 115Pd that engages with the key 114P, but since processing of the key groove 115Pd being an inner groove is complicated, processing cost is relatively high. In contrast, in the example tube pump, the rotation restriction of the gear 115 is realized by the engagement of the depressed portion 115d and the protruding portion 114d which are easy to process. Furthermore, the rotation restricting part 114 can be manufactured inexpensively by sheet metal processing.

The above description is directed to the embodiment of the present invention. However, the present invention is not limited to the configurations of the above-described embodiment, but are capable of various modifications within the scope of the technical concept.

In the above-described embodiment, a portion of the roller 156a protrudes to an outer peripheral side with respect to the frames 151, 152, but the present invention is not limited to this configuration. The entire roller 156a may be disposed slightly to an inner peripheral side with respect to outer peripheral edges of the frames 151, 152.

In the above-described embodiment, the rotor 150 is configured to rotatably support a plurality of rollers, but the present invention is not limited to this configuration. For example, a configuration in which a roller having an eccentric rotary shaft is used in place of the rotor 150 is also within the scope of the present invention.

In the above-described embodiment, the screw holes 171, the through holes 172 and the bolts 173 are used as the fixing structure 170 for fixing the cover 140 to the base 130 and the cover 140 is screwed to the base 130, but the present invention is not limited to this configuration. It is sufficient that the fixing structure 170 can be switched between a fixed state in which the displacement of the cover 140 with respect to the base 130 in the up-down direction is restricted and a state where the fixing is released, and the method therefor is not limited to screwing.

In the above-described embodiment, resins are used as materials for the main structural members of the tube pump 100 (e.g., the base 130, the cover 140 and the rotor 150), but other types of structure materials such as aluminium alloys or magnesium alloys may be used.

## Claims

1. A tube pump (100) comprising:-
a base (130) having a cylindrical supporting part (131a) protruding from one face side, the cylindrical supporting part (131a) having a hollow portion;
a bearing (154a, 154b) placed on an outer periphery of the cylindrical supporting part (131a);
a columnar inner peripheral surface (142e) provided on said one face side;
a tube (160) of which at least a portion is disposed along the inner peripheral surface (142e);
a rotor (150) disposed concentrically with the inner peripheral surface (142e) and having a coupling hole to accommodate the cylindrical supporting part (131a) and the bearing (154a, 154b) whereby the rotor (150) is rotatably supported by the bearing (154a, 154b) while squeezing the tube (160) between the rotor (150) and the inner peripheral surface (142e);
a drive unit (110) attached on the other face side of the base (130) and having a drive shaft (113) passing through the base (130) to the one face side to be coupled to the rotor;
**characterised by**
a cylindrical coupling member (157) located in the hollow portion of the cylindrical supporting part (131a);
a coupling hole (151e) is formed at a center of the rotor (150) in which one end of the coupling member (157) fits to couple to the rotor (150);
wherein the other end of the cylindrical coupling member (157) has a fitting hole into which a distal end of the drive shaft (113) fits when the drive shaft (113) is inserted in the cylindrical coupling member (157) to couple the drive shaft (113) of the drive unit.

2. A tube pump (100) according to claim 1
wherein the one end of the cylindrical coupling member (157) has a spline joint for coupling the rotor (150) to the cylindrical coupling member (157).

3. A tube pump (100) according to claim 1 or 2
wherein an annular groove extending in a circumferential direction is formed on an inner peripheral surface of the rotor (150) on which the coupling hole is formed;
wherein the bearing (154a, 154b) placed on an outer periphery of the cylindrical supporting part (131a) comprises a pair of bearings (154a, 154b);
wherein a cylindrical spacer (155) is tucked between the pair of bearings (154a, 154b); and
wherein the pair of bearings (154a, 154b) and the spacer (155) fit in the annular groove.

4. A tube pump (100) according to claim 3
wherein the spacer (155) is fixed to the inner peripheral surface of the rotor (150) on which the coupling hole is formed.

5. A tube pump (100) according to any preceding claim
wherein, in an axial direction of the rotor, a position of the coupling member overlaps with the position of the bearing.

## Patentansprüche

1. eine Schlauchpumpe (100) umfassend: -
Eine Basis (130) mit einem zylindrischen Halteteil (131a), das aus einer Stirnseite herausragt, das zylindrische Halteteil (131a) hat dabei einen hohlen Abschnitt;
ein Lager (154a, 154b) an einem Außenumfang des zylindrischen Halteteils (131a);
eine säulenartige innere Umfangsfläche (142e) an dieser einen Stirnseite;
einen Schlauch (160), von dem mindestens ein Abschnitt entlang der inneren Umfangsfläche (142e) angebracht ist;
einen Rotor (150), der konzentrisch an der inneren Umfangfläche (142e) angeordnet ist und eine Kupplungsöffnung hat, um das zylindrische Halteteil (131a) und das Lager (154a, 154b) aufzunehmen, wodurch der Rotor (150) drehbar durch das Lager (154a, 154b) gehalten wird, während der Schlauch (160) zwischen dem Rotor (150) und der inneren Umfangsfläche (142e) zusammengepresst wird;
eine Antriebseinheit (110), die an der anderen Stirnseite der Basis (130) angebracht ist und eine Antriebswelle (113) hat, die durch die Basis (130) zu der einen Stirnseite verläuft, um mit dem Rotor gekoppelt zu werden;
**gekennzeichnet durch**
ein zylindrisches Kupplungsteil (157), das in dem hohlen Abschnitt des zylindrischen Halteteils (131a) positioniert ist;
eine Kupplungsöffnung (151e), die in der Mitte des Rotors (150) geformt ist, in die ein Ende des Kupplungsteils (157) hineinpasst, um sich mit dem Rotor (150) zu koppeln;
wobei das andere Ende des zylindrischen Kupplungsteils (157) ein Passloch aufweist, in das ein distales Ende der Antriebswelle (113) hineinpasst, wenn die Antriebswelle (113) in das zylindrische Kupplungsteil (157) eingesteckt wird, um die Antriebswelle (113) mit der Antriebseinheit zu koppeln.

2. Schlauchpumpe (100) nach Anspruch 1
wobei das eine Ende des zylindrischen Kupplungsteils (157) ein Keilgelenk für das Koppeln des Rotors (150) mit dem zylindrischen Kupplungsteil (157) hat.

3. Eine Schlauchpumpe (100) nach Anspruch 1 oder 2
wobei eine ringförmige Nut, die sich in Umfangsrichtung erstreckt, an einer inneren Umfangsfläche des Rotors (150) gebildet wird, auf der die Kupplungsöffnung geformt ist;
wobei das Lager (154a, 154b), das an einem Außenumfang des zylindrischen Halteteils (131a) positioniert ist, ein Lagerpaar (154a, 154b) umfasst;
wobei ein zylindrischer Abstandshalter (155) zwischen das Lagerpaar (154a, 154b) gesteckt wird;
und
wobei das Lagerpaar (154a, 154b) und der Abstandshalter (155) in die ringförmige Nut passen.

4. Schlauchpumpe (100) nach Anspruch 3
wobei der Abstandshalter (155) an der inneren Umfangsfläche des Rotors (150) befestigt ist, auf der die Kupplungsöffnung geformt wird.

5. Eine Schlauchpumpe (100) nach einem der vorhergehenden Ansprüche
wobei in einer axialen Richtung des Rotors eine Position des Kupplungsteils die Position des Lagers überlappt.

## Revendications

1. Pompe de tube (100) comprenant : -
une base (130) présentant une partie support cylindrique (131a) faisant saillie sur un côté face, la partie support cylindrique (131a) présentant une partie creuse ;
un roulement (154a, 154b) placé sur une périphérie externe de la partie support cylindrique (131a) ;
une surface périphérique interne colonnaire (142e) située sur l'un des côtés face ;
un tube (160) dont au moins une partie est disposée le long de la surface périphérique interne (142e) ;
un rotor (150) disposé de manière concentrique avec la surface périphérique interne (142e) et présentant un trou d'accouplement pour accueillir la partie support cylindrique (131a) et le roulement (154a, 154b), le rotor (150) étant supporté en rotation par le roulement (154a, 154b) tout en comprimant le tube (160) entre le rotor (150) et la surface périphérique interne (142e) ;
une unité d'entraînement (110) fixée sur l'autre côté face de la base (130) et présentant un arbre d'entraînement (113) traversant la base (130) jusqu'à l'autre face pour être accouplé au rotor ;
**caractérisé par**
un élément d'accouplement cylindrique (157) situé dans la partie creuse de la partie support cylindrique (131a) ;
un trou d'accouplement (151e) est formé au centre du rotor (150) dans lequel une extrémité de l'élément de couplage (157) s'adapte pour s'accoupler au rotor (150) ;
dans laquelle l'autre extrémité de l'élément d'accouplement cylindrique (157) présente un trou de montage dans lequel s'insère l'extrémité distale de l'arbre d'entraînement (113) lorsque l'arbre d'entraînement (113) est inséré dans l'élément d'accouplement cylindrique (157) pour accoupler l'arbre d'entraînement (113) de l'unité d'entraînement.

2. Pompe de tube (100) selon la revendication 1
dans laquelle l'une des extrémités de l'élément d'accouplement cylindrique (157) présente un joint cannelé destiné à accoupler le rotor (150) à l'élément d'accouplement cylindrique (157).

3. Pompe de tube (100) selon la revendication 1 ou 2
dans laquelle une rainure annulaire s'étendant dans une direction circonférentielle est formée sur une surface périphérique interne du rotor (150) sur lequel le trou d'accouplement est formé ;
dans laquelle le roulement (154a, 154b) placé sur une périphérie externe de la partie support cylindrique (131a) comprend une paire de roulements (154a, 154b) ;
dans laquelle une entretoise cylindrique (155) est insérée entre la paire de roulements (154a, 154b) ;
et
dans laquelle la paire de roulements (154a, 154b) et l'entretoise (155) s'insèrent dans la rainure annulaire.

4. Pompe de tube (100) selon la revendication 3
dans laquelle une entretoise (155) est fixée sur une surface périphérique interne du rotor (150) sur lequel le trou d'accouplement est formé ;

5. Pompe de tube (100) selon une quelconque revendication précédente
dans laquelle, dans une direction axiale du rotor, une position de l'élément d'accouplement chevauche la position du roulement.
